# EUROPÄISCHE PATENTANMELDUNG

(11) **EP 2 045 071 A2**
(43) Veröffentlichungstag der Anmeldung: **08.04.2009**
(21) Anmeldenummer: 08450149.3
(22) Anmeldetag: 03.10.2008
(51) Int. Cl.: B30B 9/32, B29B 17/00, B08B 9/34

(54) **Vorrichtung zum Evakuieren und Spülen**

(30) Priorität: 04.10.2007 AT 15732007
(71) Anmelder: Gütl, Karl, 8522 Gross St. Florian (AT)
(72) Erfinder: Gütl, Karl, 8522 Gross St. Florian (AT)
(74) Vertreter: Wildhack & Jellinek

(57) **Zusammenfassung**

Die Erfindung betrifft eine Vorrichtung zum Evakuieren und Spülen eines Behälters mit zumindest einer Öffnung.
Erfindungsgemäß ist vorgesehen, dass ein als drucksensitiver Schalter wirkender Stutzen (3) vorgesehen ist, auf den die Öffnung des Behälters dichtend aufsetzbar ist, wobei der Stutzen (3) mit einer Wasserquelle und/oder einer Absaugvorrichtung in Wirkverbindung bringbar ist, wodurch eine Wasserspülung und/oder Evakuierung der Flasche auslösbar ist, und wobei zumindest ein erstes Widerstandsmittel (7) vorgesehen ist, das einer Druckbeaufschlagung des Stutzen (3) mit einer ersten Kraft entgegenwirkt, und dass weiters ein ebenfalls als drucksensitiver Schalter wirkendes Druckelement (2) vorgesehen ist, wodurch eine Wasserspülung der Flasche auslösbar ist, wobei zumindest ein zweites Widerstandsmittel (6) vorgesehen ist, das einer Druckbeaufschlagung des Druckelements (2) mit einer zweiten, im Vergleich zur ersten unterschiedlichen, Kraft entgegenwirkt (Fig. 1).

## Beschreibung

Die Erfindung betrifft eine Vorrichtung mit den Merkmalen des Oberbegriffs des Anspruchs 1.

Derartige Vorrichtungen werden unter anderem auf dem Gebiet der Gastronomie eingesetzt.

Es sind Vorrichtungen verfügbar, welche zum Spülen von Gläsern verwendet werden. Eine solche Spülvorrichtung wird in eine Ausnehmung einer Arbeitsplatte eingesetzt. Spülvorrichtungen nach dem Stand der Technik umfassen eine Spülplatte, auf welche das zu spülende Glas gestellt und anschließend mit Druck beaufschlagt wird. Durch die Druckbeaufschlagung wird das Glas von innen gespült.

Es besteht hier jedoch das Problem, dass eine derartige Vorgehensweise für das Spülen von Plastikflaschen nicht gut geeignet ist. Weiters besteht die Erfordernis, dass aus Gründen der Reduktion des Müllvolumens Plastikflaschen vor ihrer Entsorgung luftentleert werden müssen. Dies ist mit derartigen Spülvorrichtungen nach dem Stand der Technik nicht möglich und erfordert zusätzlichen Arbeitsaufwand.

Der Erfindung liegt die Aufgabe zugrunde, eine Vorrichtung zu schaffen, mit der Behälter in einem gemeinsamen Schritt oder nacheinander gespült und/oder evakuiert und dadurch komprimiert werden können.

Diese Aufgabe ist erfindungsgemäß durch eine Vorrichtung mit den Merkmalen des Anspruchs 1 gelöst.

Die Lösung hat den Vorteil, dass Plastikflaschen oder generell deformierbare Behälter mit zumindest einer Öffnung von innen gespült und luftleer gesaugt und dadurch komprimiert werden können. Dies hat den Vorteil, dass die Flasche bei ihrer Entsorgung weniger Volumen vereinnahmt. Daneben ist es möglich, dass mit einer einzigen Vorrichtung Flaschen und Gläser gleichzeitig gespült werden können.

Gemäß Anspruch 2 wird erreicht, dass die erfindungsgemäße Vorrichtung in zumindest zwei Stellungen gebracht werden kann und eine von der beaufschlagten Kraft abhängige Beschickung der Vorrichtung mit Wasser und/oder Vakuum möglich ist.

Gemäß Anspruch 3 und 6 wird erreicht, dass allein beim Aufsetzen der Flasche unter Druckbeaufschlagung die erfindungsgemäße Vorrichtung in zwei Stellungen gebracht werden kann und eine von der beaufschlagten Kraft abhängige Beschickung der Vorrichtung mit Wasser und/oder Vakuum möglich ist.

Gemäß den Ansprüchen 4 und 5 wird erreicht, dass das Spülen mit einem Trinkglas oder ähnlichen Behälter möglich ist.

Eine Ausführung nach Anspruch 7 und 9 hat den Vorteil, dass für Wasser und Luft lediglich ein Rohr erforderlich ist und der Platzbedarf minimiert wird.

Eine Ausführung nach Anspruch 8 hat den Vorteil, dass eine Flasche luft- und wasserdicht mit dem Stutzen abgeschlossen wird. Daneben ist es auch von Vorteil, dass die benötigte Kraft zum Halten der Flasche in der Spülposition geringer ist und ein Abrutschen vermieden wird.

Eine Ausführung nach Anspruch 10 ist kostengünstig und einfach herzustellen.

Gemäß Anspruch 11 wird erreicht, dass die erfindungsgemäße Vorrichtung leicht und schnell an eine Wasserleitung, eine Unterdruckpumpe sowie an das Abwassersystem angeschlossen werden sowie an einem in der Gastronomie üblichen tischähnlichen Gegenstand montiert werden kann.

Eine Anlage gemäß dem Anspruch 12 beschreibt den Anschluss einer erfindungsgemäßen Vorrichtung an eine Wasserleitung, eine Absaugvorrichtung sowie an das Abwassersystem.

Fig. 1 zeigt den prinzipiellen Aufbau der Evakuierungsvorrichtung.

Fig. 2 zeigt das Evakuieren des deformierbaren Behälters.

Fig. 3 zeigt das gleichzeitige Spülen und Evakuieren des deformierbaren Behälters.

Fig. 4 zeigt das Spülen eines Trinkgefäßes.

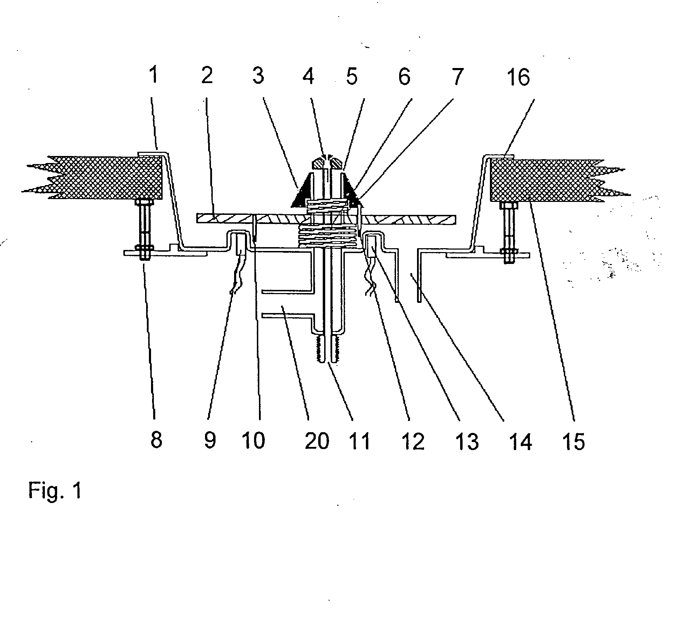

Fig. 1 zeigt den typischen Aufbau einer Vorrichtung zum Evakuieren und Spülen von deformierbaren Behältern. Die Vorrichtung umfasst einen beckenförmigen Grundkörper 1, welcher in eine durchgehende Ausnehmung einer Trägerplatte 15 eingebracht ist. Zur Befestigung des Grundkörpers 1 und der Trägerplatte 15 werden Schrauben verwendet, daneben verhindert eine Abdichtung 16, dass Wasser in den Zwischenbereich zwischen den Grundkörper 1 und die Trägerplatte 15 gelangt. Der wannenförmige Grundkörper 1 weist in der Mitte ein Anschlussrohr 1 a mit zwei getrennten Führungen auf, welches sowohl zur Führung von Vakuum als auch von Wasser herangezogen wird. Rohr 1 a ragt durch den Grundkörper 1 hindurch, wobei sich die Anschlüsse für Vakuum und Wasser unterhalb des Grundkörpers 1 befinden, während sich die Armaturen oberhalb befinden. Zur Führung des Wassers ist ein Wasseranschluss 11 vorgesehen, an welchem ein Wasserschlauch bzw. ein Wasserrohr befestigt werden kann. Der Wasseranschluss 11 mündet in eine Längsausnehmung 35, welche zur Gänze durch das Rohr 1 a führt. Diese Längsausnehmung ist zylindrisch und koaxial mit dem Rohr 1a. Im Außenbereich des Rohres 1 a befindet sich die Entlüftungs- oder Absaugführung für eine Unterdruckpumpe. Am Ende des Rohres 1a angeordnet, befindet sich ein Vakuumanschluss 20 für die Absaugvorrichtung 17, über welchen Luft abgesaugt wird. An der Seite des Rohres 1 a, welche den Anschlüssen 11, 20 für Wasser bzw. Vakuum gegenüberliegt, befinden sich ein Stutzen 3 bzw. eine Wasserdüse 4. Der Stutzen 3 ist in dieser Ausführungsform als Kegel mit einer koaxialen zylindrisch durchgehenden Längsausnehmung 35 ausgeführt. Durch diese Ausnehmung ist die Längsausnehmung 35 hindurchgeführt, und an dessen Ende ist eine Wasserdüse 4 vorgesehen. Der Stutzen 3 ist entlang der, durch das Längsausnehmung 35 gebildeten vertikalen Längsachse 30 bewegbar. Weiters ist ein Druckelement 2 vorgesehen, welches ebenfalls entlang der durch die Längsausnehmung 35 gebildeten Längsachse 30 verschiebbar ist. Normalerweise befindet sich die Wasserdüse 4 außerhalb der Ausnehmung des Stutzens 3, wobei zwischen diesen beiden Elementen ein Luftspalt 5 besteht, durch welchen Luft von einer Vakuumpumpe abgesaugt werden kann.

In einer alternativen Ausführungsform kann vorgesehen werden, dass der Stutzen 3 und die Wasserdüse 4 dicht aneinander anliegen, wobei keine Luft durch den Stutzen 3 abgesaugt werden kann. Wird anschließend der Stutzen 3 gegen den Druck der Widerstandsmittel 6, 7 nach unten gedrückt, entsteht zwischen der Wasserdüse 4 und dem Stutzen 3 ein Luftspalt 5 und Luft kann durch den Stutzen 3 abgesaugt werden. In dieser Ausführungsform ist somit nur ein Schalter 9 anzubringen, welcher bei einer Druckbeaufschlagung des Druckelements 2 entgegen dem Widerstand des zweiten Widerstandsmittels 6 eine entsprechende Aktion bewirkt.

Als Schalter können beliebige elektrische, magnetische, optische oder mechanische Schalter verwendet werden, welche die Position bzw. die Kompression der beiden Widerstandsmittel 6, 7 digital bestimmen. Diese Information wird zum Auslösen der Aktionen herangezogen.

Sowohl der Stutzen 3 als auch das Druckelement 2 werden von je einem Widerstandsmittel 6, 7 auf gegeneinander Abstand gehalten und durch das Rohr 1 a auf einer zum Rohr 1 a parallelen Längsachse 30 gehalten. Es ist hierbei lediglich eine translatorische Bewegung des Druckelements 2 entlang einer zum Rohr 1 a parallelen Längsachse 30 möglich, während andere Bewegungen konstruktionsbedingt vermieden werden. Eventuell ist eine Rotation um eine zum Rohr 1 a parallele Längsachse 30 möglich. Auch der Stutzen 3 kann lediglich entlang einer zum Rohr 1 a parallelen Längsachse 30 bewegt werden, während andere Bewegungen durch die Führung am Rohr 1 a unterdrückt werden.

Das zweite Widerstandsmittel 6 ist als Spiralfeder ausgebildet und rund um das Rohr 1 a zwischen dem Grundkörper 1 und dem Druckelement 2 angeordnet. Das erste Widerstandsmittel 7 ist ebenfalls als Spiralfeder ausgebildet und rund um das Rohr 1a zwischen dem Druckelement 2 und dem Stutzen 3 angeordnet. Für die Erfindung ist es erforderlich, dass die beiden Widerstandsmittel 6, 7 eine zumindest geringfügig unterschiedliche Federsteifigkeit aufweisen, damit bei steigender Druckbeaufschlagung des Stutzens 3 eines der beiden Widerstandsmittel 6, 7 zuerst komprimiert wird und das System in bei jeder beliebigen Druckbeaufschlagung einem definierten Zustand ist. Bei der Druckbeaufschlagung des Stutzens 3 können drei unterschiedliche Systemzustände vorliegen. Als Ausgangszustand befindet sich die Vorrichtung im nicht- oder nur geringfügig beaufschlagten Zustand, in dem keine der beiden Federn nennenswert komprimiert ist und daher auch keine Aktion ausgelöst wird. In einem Zwischenzustand ist eines der beiden Widerstandsmittel 6, 7 komprimiert, während das jeweils andere Widerstandsmittel nur geringfügig oder mäßig komprimiert ist und es wird eine Aktion ausgelöst. Bei einer Druckbeaufschlagung, welche den Widerstand beider Widerstandsmittel 6, 7 überwindet, wird eine Aktion ausgelöst, welche sich von der Aktion, welche im Zwischenzustand ausgelöst wird, unterscheidet.

Aktionen, welche durch die Druckbeaufschlagung der Widerstandsmittel ausgelöst werden können das Spülen mit Wasser bzw. das Evakuieren oder beide dieser Aktionen zugleich sein.

Weiters ist im Grundkörper 1 ein Abfluss 14 vorgesehen. Dieser Abfluss 14 dient zum Sammeln des Spülwassers, welches aus der Wasserdüse 4 zum Spülen verwendet wird. Dieser Abfluss 14 ist üblicherweise im Betrieb an das Abwassernetz angeschlossen.

Zur Steuerung des Vakuums bzw. des Wasserdrucks sind zwei elektronische Schalter 9, 13 vorgesehen. Wird das Druckelement 2 bzw. der Stutzen 3 gegen die Steifigkeit der Widerstandsmittel 6 bzw. 7 bewegt, so wird ein Auslöser 10, 12 in den Nahebereich eines Schalters 9, 13 gebracht und somit das Umschalten, beispielsweise eines Magnetventils, bewirkt.

Eine typische Anwendung der erfindungsgemäßen Vorrichtung stellt sich wie folgt dar: Eine Flasche wird auf den Stutzen 3 aufgesetzt und mit Kraft beaufschlagt, wobei diese Kraft gegen die Widerstandsmittel 6 und 7 wirkt.

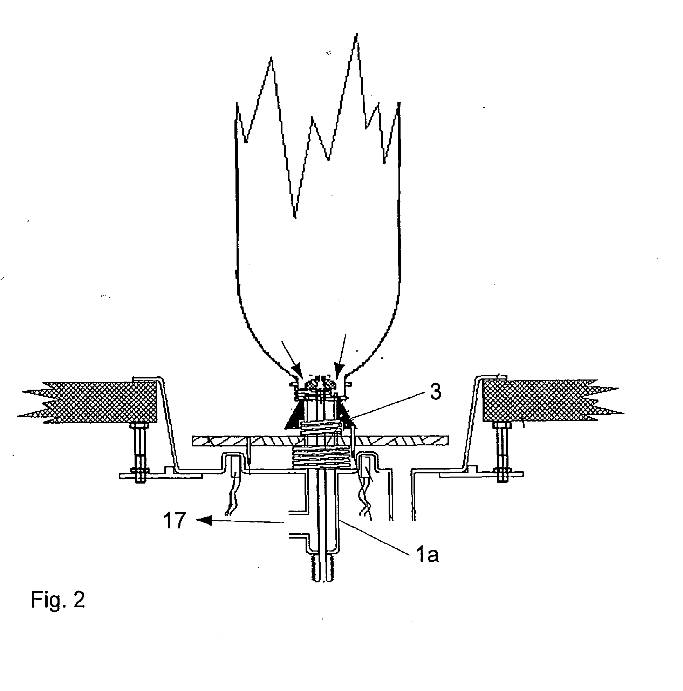

Die einzelnen Vorgänge des Spülens sind in den Fig. 2, 3 und 4 dargestellt. Für die Spülung einer Flasche können zwei unterschiedliche Vorrichtungen eingesetzt werden, welche sich in dem Verhältnis der beiden Federsteifigkeiten der Widerstandsmittel 6, 7 zueinander unterschieden.

Im ersten Fall ist die Federsteifigkeit des zweiten Widerstandsmittels 6 größer als die Steifigkeit des ersten Widerstandsmittels 7. Zunächst wird die Flasche auf den Stutzen 3 aufgesetzt und mit einer, den Widerstand beider Widerstandsmittel 6, 7 überwindenden Kraft gegen den Stutzen 3 gedrückt. In diesem Zustand lösen beide Schalter 9, 13 aus und die Flasche wird mit Wasser gespült und luftleer gesaugt. Hierbei wird das Wasser durch den Stutzen 3 abgesaugt, sodass nur wenig Wasser in der Flasche verbleibt, die Flasche aber nur geringfügig komprimiert wird. Anschließend wird der Druck auf die Flasche und somit auf den Stutzen 3 verringert, was bewirkt, dass das zweite Widerstandsmittel 6 auf Grund der Festlegung der Federsteifigkeiten der Widerstandsmittel 6, 7 zuerst in seinen ursprünglichen Zustand zurückkehrt, während das erste Widerstandsmittel 7 komprimiert verbleibt. Aus diesem Grund wird die Versorgung mit Wasser unterbrochen, und die Flasche wird luftleer gesaugt. Die deformierbare Flasche wird durch den entstehenden Unterdruck zusammengedrückt. Ist der Vorgang beendet, beendet der Benutzer die Druckbeaufschlagung auf den Stutzen 3 und verschließt die Flasche, welche nun in der zusammengedrückten Stellung verbleibt.

Eine Alternative bildet die Variante, dass das erste Widerstandsmittel 7 eine größere Federsteifigkeit als das zweite Widerstandsmittel 6. In diesem Fall wird beim Aufsetzen der Flasche zunächst nur das zweite Widerstandsmittel 6 komprimiert. Als resultierende Aktion auf die Kompression des zweiten Widerstandsmittels 6 wird in diesem Fall die mit Wasser gespült. Wird die Druckbeaufschlagung verstärkt, und beide Widerstandsmittel 6, 7 komprimiert, so schaltet die Vorrichtung die Wasserspülung aus und saugt Luft aus der Flasche ab. Ist dieser Vorgang beendet, kann die Flasche von der Vorrichtung genommen und verschlossen werden.

In beiden Ausführungsformen ist die Spülung eines Glases durch das Aufsetzen auf das Druckelement 2 möglich, wobei stets vermieden wird, dass bei einem aufgesetzten Glas die Absaugvorrichtung 17 Luft aus dem Glas saugt.

Fig. 2 zeigt schematisch das Entleeren der Flasche durch die erfindungsgemäße Vorrichtung. Dabei wird die Luft durch den Stutzen 3 aus der Flasche 1 a gesaugt und mittels einer Unterdruckpumpe 17 abgesaugt.

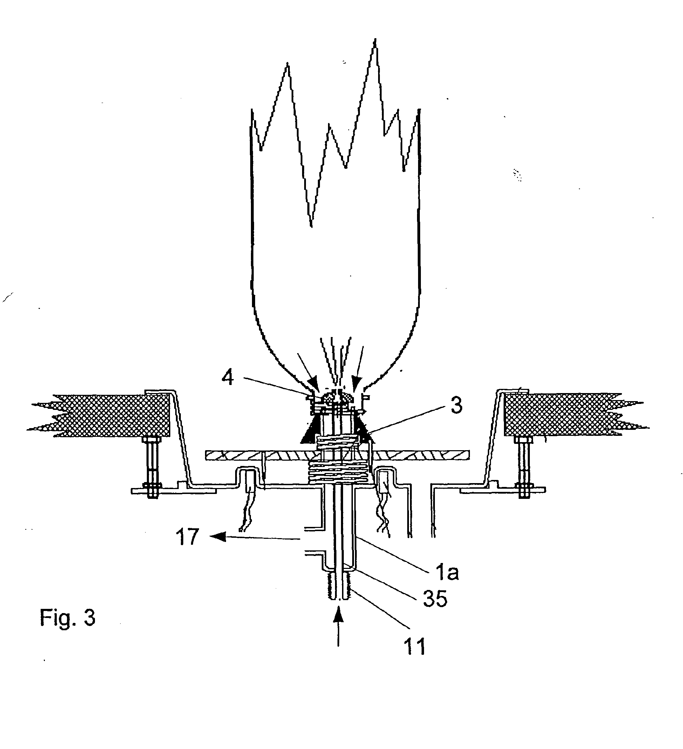

Fig. 3 zeigt schematisch gleichzeitige Entleeren und Spülen der Flasche durch die erfindungsgemäße Vorrichtung. Dabei wird die Luft durch den Stutzen 3 aus der Flasche 1 a gesaugt und mittels einer Unterdruckpumpe 17 abgesaugt und gleichzeitig Wasser durch den Wasseranschluss 11 in die Wasserdüse 4 gespült.

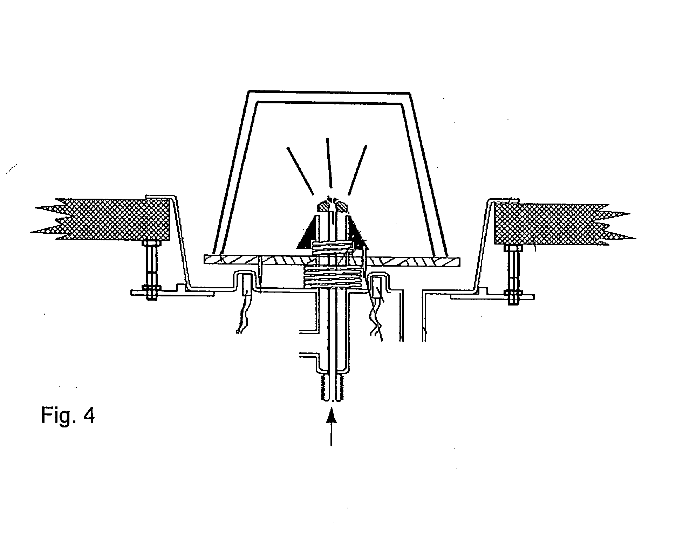

Fig. 4 zeigt schematisch das Spülen eines Wasserglases durch die erfindungsgemäße Vorrichtung. Dabei wird Wasser durch den Wasseranschluss 11 in die Wasserdüse 4 gespült.

## Patentansprüche

1. Vorrichtung zum Evakuieren und Spülen eines Behälters mit zumindest einer Öffnung, beispielsweise von Flaschen aus Kunststoff, **dadurch gekennzeichnet,**
- **dass** ein als drucksensitiver Schalter wirkender Stutzen (3) vorgesehen ist, auf den die Öffnung des Behälters dichtend aufsetzbar ist, wobei der Stutzen (3) mit einer Wasserquelle und/oder einer Absaugvorrichtung, insbesondere für gasförmige Medien, in Wirkverbindung bringbar ist, wodurch eine Wasserspülung und/oder Evakuierung der Flasche auslösbar ist, und wobei zumindest ein erstes Widerstandsmittel (7), insbesondere ein Federmittel (7), vorgesehen ist, das einer Druckbeaufschlagung des Stutzen (3) mit einer ersten Kraft entgegenwirkt, und
- **dass** weiters ein ebenfalls als drucksensitiver Schalter wirkendes Druckelement (2), insbesondere eine Druckplatte, vorgesehen ist, wodurch eine Wasserspülung der Flasche auslösbar ist, wobei zumindest ein zweites Widerstandsmittel (6), insbesondere ein Federmittel (6), vorgesehen ist, das einer Druckbeaufschlagung des Druckelements (2) mit einer zweiten, im Vergleich zur ersten unterschiedlichen, Kraft entgegenwirkt.

2. Vorrichtung nach Anspruch 1, **dadurch gekennzeichnet, dass** das Druckelement (2) unabhängig vom Stutzen (3) bzw. von einer Druckbeaufschlagung des Stutzens (3) reversibel verstellbar bzw. schaltbar bzw. druckbeaufschlagbar ist.

3. Vorrichtung nach einem der vorangehenden Ansprüche, **dadurch gekennzeichnet, dass** bei Druckbeaufschlagung des Stutzens (3) die Druckbeaufschlagung auf das Druckelement (2) wirkt bzw. sich auf das Druckelement (2) erstreckt.

4. Vorrichtung nach einem der vorangehenden Ansprüche, **dadurch gekennzeichnet, dass** der Stutzen (3) eine geringere Flächenausdehnung bzw. einen geringeren Durchmesser als das Druckelement (2) aufweist.

5. Vorrichtung nach einem der vorangehenden Ansprüche, **dadurch gekennzeichnet, dass** sich das Druckelement (2) zur Gänze im Bereich unterhalb des Stutzens (3) erstreckt.

6. Vorrichtung nach einem der vorangehenden Ansprüche, **dadurch gekennzeichnet, dass** das erste Widerstandsmittel (7) zwischen dem Stutzen (3) und dem Druckelement (2) angeordnet ist und wirkt.

7. Vorrichtung nach einem der vorangehenden Ansprüche, **dadurch gekennzeichnet, dass** der Stutzen (3) eine zentrale Längsausnehmung (35) aufweist, über die die Flasche mit Wasser und/oder Vakuum beaufschlagbar ist, wobei vorzugsweise, insbesondere in der Längsausnehmung (35), eine mit der Wasserquelle verbindbare Wasserdüse (4) angeordnet ist.

8. Vorrichtung nach einem der vorangehenden Ansprüche, **dadurch gekennzeichnet, dass** der Stutzen (3) konisch, insbesondere in der Form eines Hohlkegelstumpfes, ausgestaltet ist.

9. Vorrichtung nach einem der vorangehenden Ansprüche **dadurch gekennzeichnet, dass** das Druckelement (2), der Stutzen (3), die Wasserdüse (4) sowie die, insbesondere als Spiralfedern ausgebildeten, Widerstandsmittel (6,7) symmetrisch, insbesondere rotationssymmetrisch, um eine gemeinsame, insbesondere vertikale, Längsachse (30) angeordnet sind bzw. in Richtung dieser Längsachse (30) verschiebbar gelagert sind.

10. Vorrichtung nach einem der vorangehenden Ansprüche **dadurch gekennzeichnet, dass** der Stutzen (3) und das Druckelement (2) auf einem symmetrisch zur Längsachse (30) ausgerichteten Rohr (1a) beweglich verschiebbar angeordnet sind, wobei das Rohr (1a) sowohl den Stutzen (3) als auch das Druckelement (2) durchsetzt bzw. die Längsausnehmung (35) des Stutzens (3) bildet, wobei an einem Ende des Rohres (1a) die mit einer Wasserquelle verbindbare Wasserdüse (4) und der Stutzen (3) angebracht sind und am anderen Ende des Rohres (1a) ein Wasseranschluss (11) zum Anschluss an eine Wasserquelle und/oder ein Vakuumanschluss (20) zum Anschluss an eine Absaugvorrichtung (17) ausgebildet sind.

11. Beckenförmiger Grundkörper (1), insbesondere Spülbecken, mit einem Abfluss (14) in dem eine Vorrichtung gemäß einem der vorangehenden Ansprüche angeordnet ist, wobei insbesondere das Rohr (1a) den Boden des beckenförmigen Grundkörpers (1) durchsetzt und/oder das Rohr (1a) und der Abfluss (14) zusammenfallen bzw. der Abfluss (14) als Rohr (1 a) fungiert.

12. Anlage umfassend eine Vorrichtung bzw. einen Grundkörper (1) nach einem der vorangehenden Ansprüche, sowie eine Absaugvorrichtung (17) und eine Wasserquelle,
**dadurch gekennzeichnet,**
- **dass** die Absaugvorrichtung (17) an den Vakuumanschluss (20) bzw. an das, den Unterdruck führende Rohr (1a) angeschlossen ist, und gegebenenfalls ein Unterdruckventil (21) zur Unterbrechung der Luftabfuhr vorgesehen ist,
- **dass** der Wasseranschluss (11) an die Wasserquelle bzw. ein Wasserversorgungsnetz oder eine Wasserpumpe angeschlossen ist und gegebenenfalls ein Wasserventil (22) zur Unterbrechung der Wasserzufuhr vorgesehen ist,
- und **dass** gegebenenfalls eine den Ventilen (21) und (22) vorgeschaltete Steuerungseinrichtung vorgesehen ist.
